(19) Europäisches Patentamt
European Patent Office
Office européen des brevets

(11) **EP 4 664 361 A1**

(12) **EUROPEAN PATENT APPLICATION**
published in accordance with Art. 153(4) EPC

(43) Date of publication:
**17.12.2025 Bulletin 2025/51**

(21) Application number: **23921162.6**

(22) Date of filing: **09.02.2023**

(51) International Patent Classification (IPC):
***G06N 3/091*** (2023.01)   ***G06N 20/00*** (2019.01)

(52) Cooperative Patent Classification (CPC):
**G06N 20/00; G06N 3/09; G06N 3/091**

(86) International application number:
**PCT/JP2023/004458**

(87) International publication number:
**WO 2024/166331 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **SONODA, Ryosuke**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **MACHINE LEARNING PROGRAM, METHOD, AND DEVICE**

(57)     A machine learning apparatus calculates independence between a prediction result in a case in which each of items of unlabeled data is input to a machine learning model and a value of a first attribute of each of the items of data, selects first data from the items of data based on the independence, acquires a label of the first data, and executes training of the machine learning model based on the first data and the label.

**FIG.3**

## Description

FIELD

The disclosed technology relates to a machine learning program, a machine learning method, and a machine learning apparatus.

BACKGROUND

Hitherto, a technique related to a machine learning model in consideration of fairness has been proposed. For example, a learning apparatus that inputs training data for learning a classifier and a causal graph representing a causal relationship between variables included in the training data has been proposed. This learning apparatus learns a classifier by solving a constrained optimization problem in which an average of causal effects between predetermined variables is within a predetermined range and a variance of the causal effects is equal to or less than a predetermined value using input training data and a causal graph.

For example, an information processing apparatus that artificially increases data with a small number of attributes to generate learning data for performing fair determination on each input data has been proposed. The information processing apparatus holds first learning data used for learning of a machine learning model, acquires information regarding bias of the learning data, and generates second learning data using data included in the learning data based on the information regarding the bias. Then, the information processing apparatus learns the machine learning model using the first learning data and the second learning data.

For example, a system for labeling unlabeled data according to an amount of label bias has been proposed. The system samples the input data according to discrepancies between the amounts of selection biases and rarities of features and trains the classifier using sampled and labeled data and additional unlabeled data.

As a method of executing training of a machine learning model by active learning in consideration of fairness, a method in which active learning and semi-supervised learning are integrated has been proposed. This approach selects the most valuable unlabeled data and sends it to an expert system for labeling. This approach establishes a connection between unlabeled data and labeled data, improves the model using unique information of the unlabeled data, and assigns pseudo-labels to those samples.

Prior Art Document

Patent Literature

Patent Literature 1: WO 2021/084609
Patent Literature 2: WO 2022/123907
Patent Literature 3: US 2020/0372406 A

Non-Patent Literature

Non-Patent Literature 1: Quan Ren, Hongbing Zhang, Dailu Zhang, Xiang Zhao, Lizhi Yan, Jianwen Rui, Fanxin Zeng, Xinyi Zhu, "A framework of active learning and semi-supervised learning for lithology identification based on improved naive Bayes," Expert Systems with Applications, Volume 202, 15 September 2022, 117278.

SUMMARY OF INVENTION

Technical Problem

However, in a conventional learning method (hereinafter referred to as "fair active learning") in which training of a machine learning model is executed by active learning in consideration of fairness, training of a machine learning model is needed even in processing of selecting data to be labeled, and there is a problem that a processing load is high.

As one aspect, an object of the disclosed technology is to reduce a processing load of fair active learning.

Solution to Problem

As one aspect, the disclosed technology calculates independence between a prediction result in a case in which each of a plurality of items of unlabeled data is input to a machine learning model and a value of a first attribute of each of the plurality of items of data. Then, the disclosed technology selects first data from the plurality of items of data based on the independence, acquires a label of the first data, and executes training of the machine learning model based on the first data and the label.

Advantageous Effects of Invention

As one aspect, the disclosed technology has an effect that a processing load of fair active learning can be reduced.

BRIEF DESCRIPTION OF DRAWINGS

Fig. 1 is a diagram for describing active learning.
Fig. 2 is a diagram for describing conventional fair active learning.
Fig. 3 is a diagram for describing fair active learning in the present embodiment.
Fig. 4 is a functional block diagram of a machine learning apparatus according to the present embodiment.
Fig. 5 is a diagram for describing an example of a degree of accuracy improvement.
Fig. 6 is a block diagram illustrating a schematic configuration of a computer functioning as a machine learning apparatus.
Fig. 7 is a flowchart illustrating an example of machine learning processing.
Fig. 8 is a diagram illustrating comparison between the present method and a comparative method regarding prediction accuracy, fairness, and an execution time of fair active learning of a machine learning model.

DESCRIPTION OF EMBODIMENTS

Hereinafter, an example of an embodiment according to the disclosed technology will be described with reference to the drawings.

Before describing details of the embodiment, fair active learning of a machine learning model and a problem thereof will be described.

First, training of a machine learning model is to learn a relationship between a label (outcome variable) of data and a feature amount (explanatory variable) and to specify a parameter that approximates the relationship. Fairness in machine learning means that there is no bias or discrimination based on congenital or acquired characteristics (hereinafter, referred to as "protected attribute") of individuals or groups in decision-making in a prediction result by a machine learning model. In social implementation of the machine learning model, improvement of indicators of fairness and disparity based on a group, such as a gender difference in loan examination, a race difference in face recognition, and an age difference in disease diagnosis, is often needed. Therefore, it is important to train the machine learning model so as to obtain a fair prediction result. Since fairness of the machine learning model and prediction accuracy are in a trade-off relationship, it is also important to balance these.

In a case in which a machine learning model is trained by supervised learning, data to which a label indicating a correct answer (hereinafter referred to as "labeled data") is given is needed. Labeled data is data tagged with one or more labels. Labels are typically tagged by an oracle that is a human or another source of information. Without a sufficient number of labeled data, it is not possible to sufficiently improve the fairness and the prediction accuracy of the machine learning model. However, labeled data is more expensive to collect than unlabeled data (hereinafter referred to as "unlabeled data").

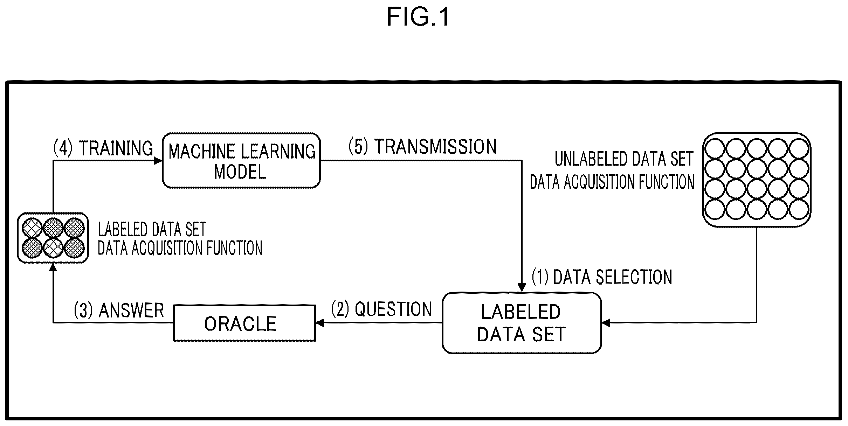

Active learning is an interactive machine learning method of improving a machine learning model by question. Specifically, as illustrated in Fig. 1, the information processing apparatus that executes active learning executes processing of (1) data selection, (2) question, (3) answer, (4) training, and (5) transmission.

More specifically, the information processing apparatus calculates a data acquisition function for each item of data included in an unlabeled data set as processing of "(1) data selection", and preferentially selects data useful for training of the machine learning model based on the data acquisition function. The data acquisition function is an index representing ambiguity of prediction by the machine learning model for each item of data, representativeness of each item of data with respect to the unlabeled data set, and the like using information such as a parameter of the current machine learning model. The information processing apparatus inquires of the oracle about the label of the selected data as processing of "(2) Question". As the processing of "(3) answer", the information processing apparatus acquires a label that is an answer from the oracle, gives the acquired label to the selected data to obtain labeled data, and adds the labeled data to a labeled data set. The information processing apparatus trains the machine learning model using the labeled data set as processing of "(4) training". The information processing apparatus transmits information such as a parameter of the machine learning model after training to the processing of (1) data selection as the processing of "(5) transmission".

In the active learning, labeling is preferentially performed from data useful for training of the machine learning model among items of unlabeled data by repeatedly executing the processing of the above (1) to (5), so that the labeled data can be effectively collected.

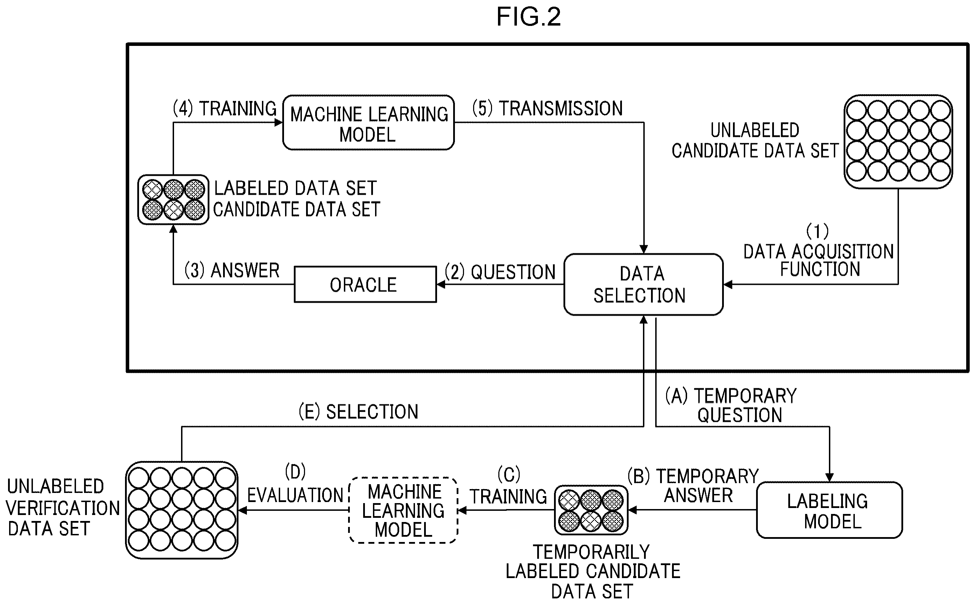

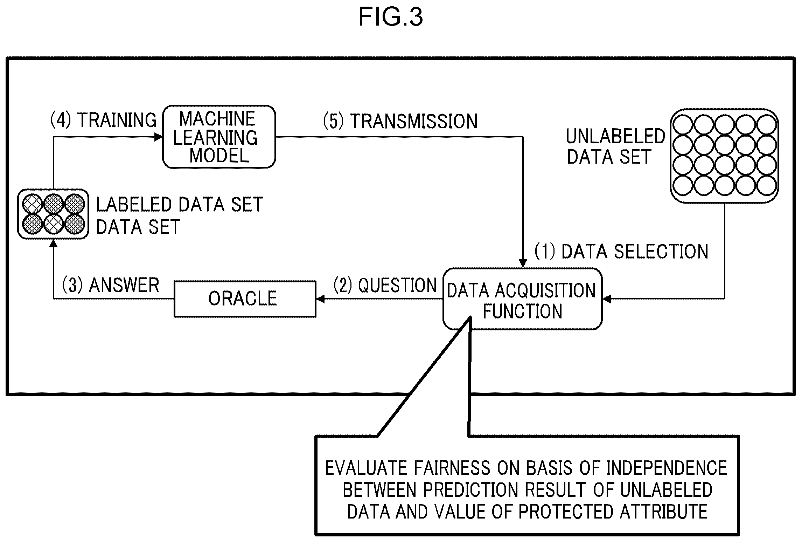

In Fig. 1, a circle represents each item of data, a white circle represents unlabeled data, a hatched circle represents labeled data, and a difference in hatching represents a difference in label. The same applies to Figs. 2 and 3 below.

In normal active learning, in (1) data selection, data useful for improving prediction accuracy of a machine learning model is selected, and fairness is not considered. Thus, as labeled data is added and training of the machine learning model progresses, the fairness may deteriorate. For example, in a machine learning model for face expression recognition, only data of a specific race may be selected from an unlabeled data set.

Accordingly, in the conventional fair active learning, data is selected in consideration of a trade-off between fairness and prediction accuracy in (1) data selection processing. Specifically, as illustrated in Fig. 2, in the conventional fair active learning, a part of the unlabeled data set is set as an unlabeled verification data set, and the rest is set as an unlabeled candidate data set. An information processing apparatus that executes the conventional fair active learning executes processing of (A) temporary question, (B) temporary answer, (C) training, (D) evaluation, and (E) selection illustrated in Fig. 2, thereby estimating a degree of unfairness improvement of a machine learning model in verification data for each item of candidate data.

More specifically, the information processing apparatus inputs each item of candidate data to a labeling model that outputs a temporary label for data as processing of "(A) temporary question". The information processing apparatus acquires the temporary label output from the labeling model as the processing of "(B) temporary answer", and assigns the acquired temporary label to each item of candidate data to obtain a temporarily labeled candidate data set. The information processing apparatus trains the machine learning model using the temporarily labeled candidate data set as the processing of "(C) training". The information processing apparatus evaluates the fairness of each item of temporarily labeled candidate data in consideration of a difference in unfairness of the machine learning model before and after training using the unlabeled verification data set as the processing of "(D) evaluation". The information processing apparatus evaluates the prediction accuracy of the machine learning model using the unlabeled verification data set. The information processing apparatus selects candidate data having the best value based on an index in consideration of a trade-off between fairness and prediction accuracy as the processing of "(E) selection".

In the conventional fair active learning, since training of the machine learning model is executed in "(1) data selection", data with which prediction accuracy is improved is selected in consideration of a decision boundary of the machine learning model. By the evaluation using the verification data, data with which fairness also improves is selected. However, training of the machine learning model has a high processing load, and there is a problem that it is not possible to efficiently execute data selection. In particular, when the machine learning model is a complex model such as a deep learning model or a nonlinear model, it is difficult to apply fair active learning in a realistic execution time.

Accordingly, in the present embodiment, as illustrated in Fig. 3, the fairness of each item of candidate data is evaluated based on independence between the prediction result of the model for unlabeled data and a value of a protected attribute without requiring training of the machine learning model.

As an easily conceivable means for solving the above problem, it is conceivable to estimate the degree of unfairness of each item of candidate data based on the prediction result of the machine learning model for each item of candidate data and select data having a low degree of unfairness from the unlabeled candidate data set. However, in this case, the influence on the verification data is not considered for the data to be selected, the representativeness of the data becomes low, for example, an outlier or similar data is easily selected. Accordingly, in the present embodiment, the prediction result of the verification data in a case in which the candidate data is given is used as the prediction result of the model for the unlabeled data. Hereinafter, a machine learning apparatus according to the present embodiment will be described.

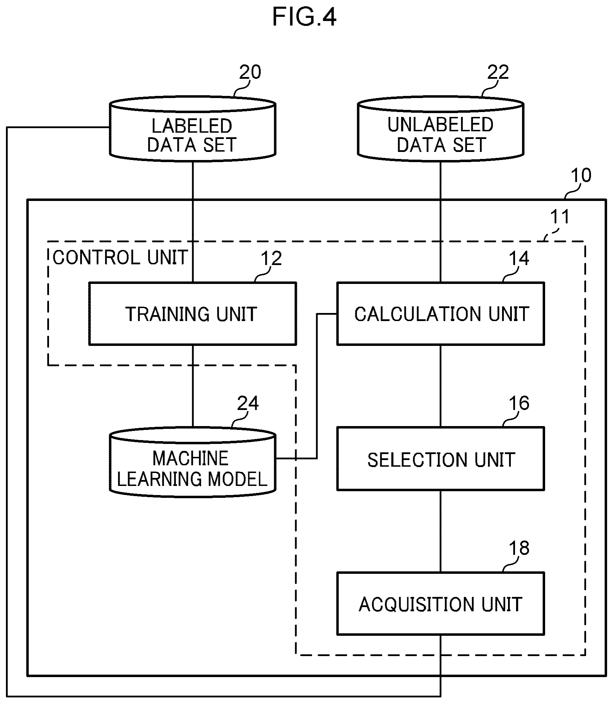

As illustrated in Fig. 4, a labeled data set 20 and an unlabeled data set 22 are input to the machine learning apparatus 10. It is assumed that the number of items of labeled data included in the labeled data set 20 is quite smaller than the number of items of unlabeled data included in the unlabeled data set 22. The machine learning apparatus 10 selects data in consideration of fairness from the unlabeled data set 22 and executes training of a machine learning model 24. That is, the machine learning apparatus 10 executes fair active learning.

The machine learning apparatus 10 functionally includes a control unit 11 as illustrated in Fig. 4. The control unit 11 further includes a training unit 12, a calculation unit 14, a selection unit 16, and an acquisition unit 18. The machine learning model 24 is stored in a predetermined storage area of the machine learning apparatus 10.

The training unit 12 executes training of the machine learning model 24 using a plurality of labeled data included in the labeled data set 20 as training data. As described later, in the present embodiment, the acquisition unit 18 adds new labeled data to the labeled data set 20. In a case in which the new labeled data is added to the labeled data set 20, the training unit 12 executes training of the machine learning model 24 using the initial labeled data and the added labeled data.

The calculation unit 14 calculates the independence between the prediction result (hereinafter, referred to as "prediction label") in case in which each of the plurality of items of unlabeled data included in the unlabeled data set 22 is input to the machine learning model 24 and the value of the protected attribute of each of the plurality of items of data. The protected attribute is an example of a "first attribute" of the disclosed technology. The calculation unit 14 calculates a mutual information amount between the prediction label and the value of the protected attribute as the independence. The mutual information amount is an index quantitatively indicating whether or not two variables are dependent on each other, and when the two variables are completely independent of each other, the mutual information amount is 0. That is, when the mutual information amount between the prediction label and the value of the protected attribute is 0, it can be said that the machine learning model 24 is completely fair. Therefore, it can be said that unlabeled data having the smallest mutual information amount is the most fair data.

In the present embodiment, the calculation unit 14 calculates the degree of unfairness improvement of the machine learning model 24 based on the mutual information amount between the prediction label and the value of the protected attribute for the verification data conditioned with each item of candidate data. Specifically, the calculation unit 14 sets a part of a plurality of items of unlabeled data included in the unlabeled data set 22 as verification data and sets data other than the verification data as candidate data. The calculation unit 14 calculates independence between the prediction label of each item of the verification data and the value of the protected attribute, the independence being conditioned on independence between the prediction label of each item of candidate data and the value of the protected attribute.

More specifically, the calculation unit 14 calculates a difference between a mutual information amount I between a prediction label $Y_v$ of verification data v and a value $S_v$ of the protected attribute in the verification data v before and after candidate data u is given as the degree of unfairness improvement $F_u$ of the candidate data u by the following Formula (1).
[Math. 1]

$$F_u = \sum_v \{I(Y_v; S_v) - I(Y_v; S_v|Y_u, S_u)\} \qquad (1)$$

(1) In the formula, $Y_u$ represents the prediction label of the candidate data u, and $S_u$ represents the value of the protected attribute in the candidate data u. (1) The first term in $\Sigma$ on the right side of the formula is the mutual information amount of the verification data v before the candidate data u is given, and the second term is the mutual information amount of the verification data v after the candidate data u is given. (1) In the case of the formula, the candidate data u having a larger value of the degree of unfairness improvement $F_u$ indicates that the degree of unfairness improvement is higher.

The calculation unit 14 calculates the second term in $\Sigma$ on the right side of Formula (1) as follows. First, the calculation unit 14 converts the second term into the following Formula (2). (2) In the formula, H(X) is an entropy of X.
[Math. 2]

$$\begin{aligned}
&I(Y_v; S_v|Y_u, S_u) \\
&= H(Y_v|Y_u, S_u) - H(Y_v|S_v, Y_u, S_u) \\
&= \{H(Y_v, Y_u, S_u) - H(Y_u, S_u)\} \\
&\quad - \{H(Y_v, S_v, Y_u, S_u) - H(S_v, Y_u, S_u)\}
\end{aligned} \qquad (2)$$

Next, the calculation unit 14 approximates a probability distribution corresponding to each entropy by Monte Carlo dropout. Assuming that the parameter of the machine learning model 24 and the distribution of the prediction label of the machine learning model 24 are conditionally independent, the calculation unit 14 calculates the probability $P(Y_i)$ of $Y_i$ by the following Formula (3). Here, $Y_i = \{Y_v, S_v, Y_u, S_u\}$.
[Math. 3]

$$P(Y_i) = P(Y_i|\boldsymbol{\theta}) \approx \frac{1}{M}\sum_{m=1}^{M} P(Y_i|\boldsymbol{\theta}) \qquad (3)$$

(3) In the formula, $\theta$ is a parameter of the machine learning model 24, and M is the number of times of Monte Carlo sampling. The calculation unit 14 calculates the mutual information amount of Formula (2) using the probability distribution of Formula (3).

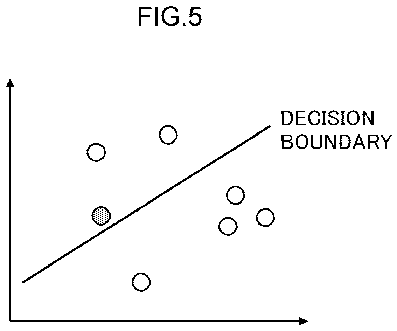

The calculation unit 14 calculates, for each item of candidate data, the degree of improvement in prediction accuracy of the machine learning model 24 by each item of candidate data based on uncertainty of the prediction result when each item of candidate data is input to the machine learning model 24. For example, data located near a decision boundary of the machine learning model 24 can be said to be data that is difficult for the machine learning model 24 to determine, and thus, by using such data as training data, the prediction accuracy of the machine learning model 24 can be improved. For example, in the machine learning model 24, as illustrated in Fig. 5, it is assumed that a decision boundary is defined in a feature space. In the example of Fig. 5, an example of binary classification of a linear model is illustrated, and each circle represents a feature amount of each item of data. In this case, data near the decision boundary (for example, data indicated by a halftone circle in Fig. 5) is unstable to which label it belongs, and is useful for improving the accuracy of the machine learning model 24. Accordingly, the calculation unit 14 calculates the degree of accuracy improvement that becomes higher as the candidate data is closer to the decision boundary of the machine learning model. For example, the calculation unit 14 calculates entropy indicating uncertainty of the prediction label $Y_u$ of the candidate data u as the degree of accuracy improvement $A_u$ as expressed in the following Formula (4). (4) In the formula, Y is a set of prediction labels of the machine learning model 24.

[Math. 4]

$$A_u = H(Y_u|u) = -\sum_{Y_u \in Y} P(Y_u|u) \log P(Y_u|u) \qquad (4)$$

The calculation unit 14 calculates an evaluation value $E_u$ for each item of the candidate data u represented by the degree of unfairness improvement $F_u$, the degree of accuracy improvement $A_u$, and a coefficient $\alpha$ representing a trade-off between the degree of unfairness improvement $F_u$ and the degree of accuracy improvement $A_u$, for example, as expressed in the following Formula (5).

$$E_u = \alpha \times F_u + (1\text{-}\alpha) \times A_u \qquad (5)$$

$\alpha$ is a value of 0 to 1 (for example, 0.6), and is a coefficient that defines how much priority is given to which of the degree of unfairness improvement $F_u$ and the degree of accuracy improvement $A_u$.

The selection unit 16 selects target data to be labeled from the plurality of items of the candidate data u based on the evaluation value $E_u$ for each item of the candidate data u calculated by the calculation unit 14. The target data is an example of "first data" of the disclosed technology. For example, the selection unit 16 may select the candidate data u having the highest evaluation value $E_u$, may select the candidate data u having the evaluation value $E_u$ equal to or more than a predetermined value, or may select a top predetermined number of items of the candidate data u having the evaluation value $E_u$.

The acquisition unit 18 inquires of an oracle that is a human or another source of information about the label of the target data selected by the selection unit 16, and acquires a label that is an answer from the oracle. The acquisition unit 18 assigns the acquired label to the target data to obtain labeled data, and adds the labeled data to the labeled data set 20. Thus, as described above, the training unit 12 executes training of the machine learning model 24 also using the added labeled data.

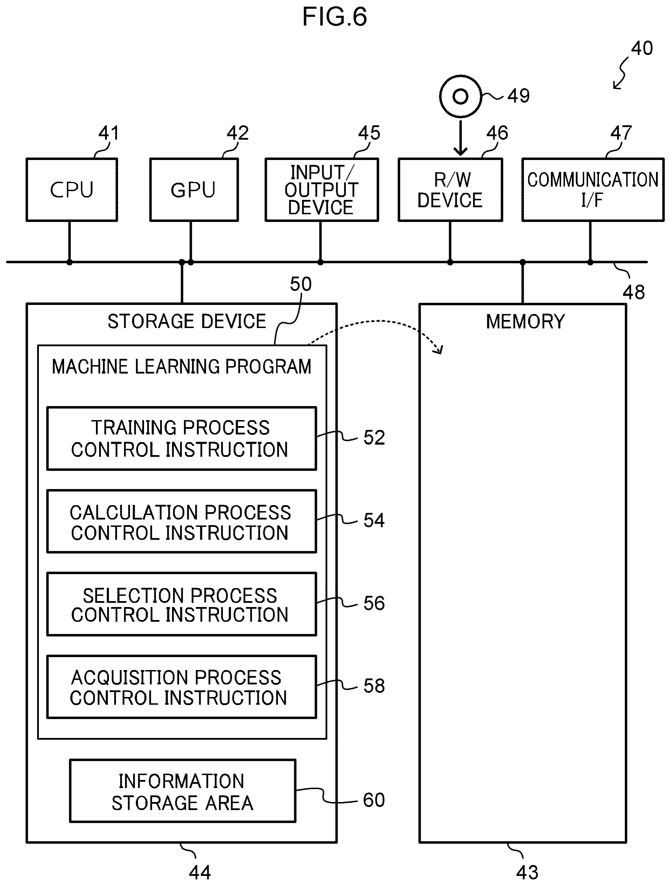

The machine learning apparatus 10 may be implemented by, for example, a computer 40 illustrated in Fig. 6. The computer 40 includes a central processing unit (CPU) 41, a graphics processing unit (GPU) 42, a memory 43 as a temporary storage area, and a nonvolatile storage device 44. The computer 40 includes an input/output device 45 such as an input device and a display device, and a read/write (R/W) device 46 that controls reading and writing of data with respect to the storage medium 49. The computer 40 further includes a communication interface (I/F) 47 connected to a network such as the Internet. The CPU 41, the GPU 42, the memory 43, the storage device 44, the input/output device 45, the R/W device 46, and the communication I/F 47 are connected to each other via a bus 48.

The storage device 44 is, for example, a hard disk drive (HDD), a solid state drive (SSD), a flash memory, or the like. The storage device 44 as a storage medium stores a machine learning program 50 for causing the computer 40 to function as the machine learning apparatus 10. The machine learning program 50 has a training process control instruction 52, a calculation process control instruction 54, a selection process control instruction 56, and an acquisition process control instruction 58. The storage device 44 includes an information storage area 60 in which information constituting the machine learning model 24 is stored.

The CPU 41 reads the machine learning program 50 from the storage device 44, develops the program in the memory 43, and sequentially executes the control instructions included in the machine learning program 50. The CPU 41 operates as the training unit 12 illustrated in Fig. 4 by executing the training process control instruction 52. The CPU 41 operates as the calculation unit 14 illustrated in Fig. 4 by executing the calculation process control instruction 54. The CPU 41 operates as the selection unit 16 illustrated in Fig. 4 by executing the selection process control instruction 56. The CPU 41 operates as the acquisition unit 18 illustrated in Fig. 4 by executing the acquisition process control instruction 58. The CPU 41 reads information from the information storage area 60 and develops the machine learning model 24 in the memory 43. Thus, the computer 40 that has executed the machine learning program 50 functions as the machine learning apparatus 10. The CPU 41 that executes the program is hardware. A part of the program may be executed by a GPU 62.

Functions implemented by the machine learning program 50 may be implemented by, for example, a semiconductor integrated circuit, more specifically, an application specific integrated circuit (ASIC), a field-programmable gate array (FPGA), or the like.

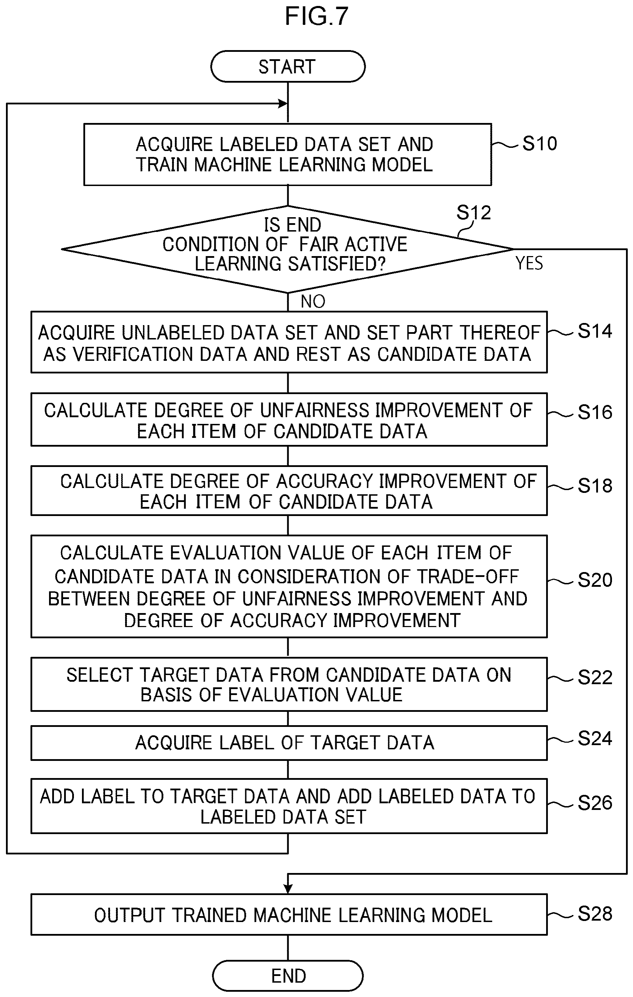

Next, an operation of the machine learning apparatus 10 according to the present embodiment will be described. When fair active learning for the machine learning model 24 is instructed, the machine learning apparatus 10 executes the machine learning processing illustrated in Fig. 7. The machine learning processing is an example of a machine learning method of the disclosed technology.

In step S10, the training unit 12 acquires the labeled data set 20 and performs training of the machine learning model 24 using the labeled data as training data. Next, in step S12, the training unit 12 determines whether or not the end condition of the fair active learning is satisfied. The end condition may be, for example, a case in which the number of data newly added to the labeled data set 20 exceeds a predetermined number. When the end condition is not satisfied, the process proceeds to step S14.

In step S14, the calculation unit 14 sets a part of the plurality of items of unlabeled data included in the unlabeled data set 22 as verification data and the rest as candidate data. Next, in step S16, the calculation unit 14 calculates a difference between the mutual information amount I between the prediction label $Y_v$ of the verification data v and the value $S_v$ of the protected attribute in the verification data v before and after the candidate data u is given as the degree of unfairness improvement $F_u$ of each item of the candidate data u, for example, as illustrated in Formula (1).

Next, in step S18, the calculation unit 14 calculates, as the degree of accuracy improvement $A_u$, entropy indicating uncertainty of the prediction label $Y_u$ of each item of the candidate data u, for example, as illustrated in Formula (4). Next, in step S20, the calculation unit 14 calculates the evaluation value $E_u$ for each item of the candidate data u represented by, for example, the degree of unfairness improvement $F_u$, the degree of accuracy improvement $A_u$, and the coefficient $\alpha$ representing a trade-off between the degree of unfairness improvement $F_u$ and the degree of accuracy improvement $A_u$ expressed by Formula (5).

Next, in step S22, the selection unit 16 selects target data to be labeled from a plurality of items of the candidate data u based on the evaluation value $E_u$ for each item of the candidate data u. Next, in step S24, the acquisition unit 18 inquires of the oracle about the label of the target data, and acquires the label which is an answer from the oracle. Next, in step S26, the acquisition unit 18 adds the acquired label to the target data to obtain labeled data, adds the labeled data to the labeled data set 20, and deletes the candidate data as the target data from the unlabeled data set 22, and returns to step S10.

Returning to step S10, the training unit 12 also uses the added labeled data to execute training of the machine learning model 24. Next, when it is determined in step S12 that the end condition of the fair active learning is satisfied, the process proceeds to step S28. In step S28, the training unit 12 outputs the trained machine learning model by the fair active learning, and the machine learning processing ends.

As described above, the machine learning apparatus according to the present embodiment calculates independence between a prediction result in a case in which each of a plurality of items of unlabeled data is input to a machine learning model and a value of a protected attribute of each of the plurality of items of unlabeled data. The machine learning apparatus selects target data from the plurality of items of unlabeled data based on the calculated independence, inquires of the oracle to acquire a label of the target data, and executes training of the machine learning model based on the target data and the acquired label. That is, the machine learning apparatus according to the present embodiment evaluates the fairness of the unlabeled data based on the information theoretical approach, and selects data to be labeled without relearning of the machine learning model. Thus, the machine learning apparatus according to the present embodiment can reduce the processing load of fair active learning.

The machine learning apparatus according to the present embodiment calculates, for each item of candidate data, the degree of unfairness improvement using the mutual information amount as the independence between the prediction result and the value of the protected attribute, and calculates the degree of accuracy improvement of the machine learning model based on uncertainty of the candidate data. Then, the machine learning apparatus selects the target data based on the evaluation value considering the trade-off between the degree of unfairness improvement and the degree of accuracy improvement. Thus, the machine learning apparatus according to the present embodiment can select, as the target data, data that optimizes the trade-off between the degree of unfairness improvement and the degree of accuracy improvement while reducing the processing load.

The machine learning apparatus according to the present embodiment sets a part of the unlabeled data as verification data and the rest as candidate data, and calculates a difference in the mutual information amount between the prediction result of the verification data and the value of the protected attribute before and after giving the candidate data as the degree of unfairness improvement. In this way, by calculating the degree of unfairness improvement of the candidate data in consideration of the influence on the verification data, data having high representativeness is easily selected from the candidate data.

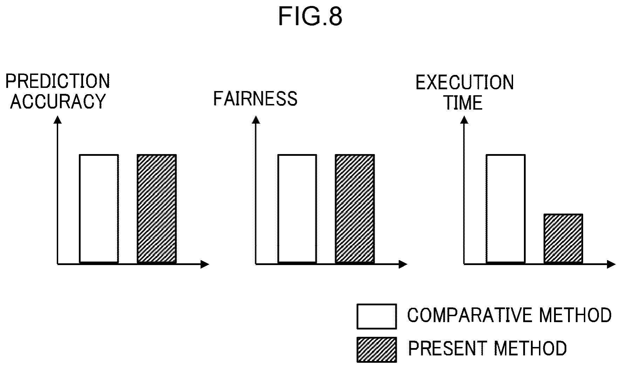

Fig. 8 schematically illustrates a comparison between the method of the present embodiment (hereinafter referred to as "the present method") and a comparative method regarding prediction accuracy, fairness, and an execution time of fair active learning of the machine learning model. The comparative method here is a method that requires relearning of a machine learning model when selecting data to be labeled as in the method described in Non Patent Literature 1. The present method is equivalent to the comparative method in the trade-off between the prediction accuracy and the fairness. The present method significantly reduces the execution time as compared with the comparative method. The theoretical calculation cost of the fair active learning is "$O((T + N_v)CN_u)$" in the comparative method and "$O(N_uN_vC^2M)$" in the present method. T is a calculation cost of training of the machine learning model, $N_v$ is the number of verification data, $N_u$ is the number of candidate data, C is the number of labels, and M is the number of Monte Carlo sampling.

In the above embodiment, the case in which the fairness is evaluated using a part of the unlabeled data as the verification data has been described, but the present invention is not limited thereto. All data included in the unlabeled data set may be set as the candidate data. In this case, as the index of the fairness, for example, it is sufficient if a formula excluding the second term in $\Sigma$ on the right side of the Formula (1) is used. In the above embodiment, the case in which data is selected using an evaluation value in consideration of a trade-off between fairness and prediction accuracy has been described, but data may be selected in consideration of only the fairness.

In the above embodiment, the case in which the mutual information amount is used as an index indicating the independence between the prediction result of the machine learning model for the unlabeled data and the value of the protected attribute has been described. The mutual information amount may be any amount as long as the independence between the prediction result and the value of the protected attribute can be defined in a mathematical manner, and for example, the Kullback-Leibler divergence, the Yensen-Shanon divergence, covariance, the demographic parity difference, the disparate impact ratio, or the like may be applied.

In the above embodiment, the machine learning program is stored (installed) in the storage device in advance, but the present invention is not limited thereto. The program according to the disclosed technology may be provided in a form stored in a storage medium such as a CD-ROM, a DVD-ROM, or a USB memory.

Description of Reference Numerals

10   Machine learning apparatus
11   Control unit
12   Training unit
14   Calculation unit
16   Selection unit
18   Acquisition unit
20   Labeled data set
22   Unlabeled Data Set
24   Machine learning model
40   Computer
41   CPU
42   GPU
43   Memory
44   Storage device
45   Input/output device
46   R/W device

47    Communication I/F
48    Bus
49    Storage medium
50    Machine learning program
52    Training process control instruction
54    Calculation process control instruction
56    Selection process control instruction
58    Acquisition process control instruction
60    Information storage area

**Claims**

1.    A machine learning program for causing a computer to execute processing comprising:

   calculating an independence between a prediction result in a case in which each of a plurality of items of unlabeled data is input to a machine learning model, and a value of a first attribute of each of the plurality of items of data;
   selecting first data from the plurality of items of data based on the independence;
   acquiring a label of the first data; and
   executing training of the machine learning model based on the first data and the label.

2.    The machine learning program according to claim 1, wherein the independence is a mutual information amount between the prediction result and the value of the first attribute.

3.    The machine learning program according to claim 1 or 2, wherein selecting the first data includes selecting based on a degree of improvement in prediction accuracy of the machine learning model due to each of the plurality of items of data based on an uncertainty of a prediction result in a case in which each of the plurality of items of data is input to the machine learning model, and based on the independence.

4.    The machine learning program according to claim 3, wherein the degree of improvement increases the closer the first data is to a decision boundary of the machine learning model.

5.    The machine learning program according to claim 3, wherein selecting the first data includes selecting a predetermined number of items of the data in which an index represented by the degree of improvement, the independence, and a coefficient representing a trade-off between the degree of improvement and the independence, is equal to or more than a predetermined value, or selecting a predetermined number of items of the data having the highest indices.

6.    The machine learning program according to claim 1 or 2, wherein:

   calculating the independence includes configuring a part of the plurality of items of data as verification data and configuring data other than the verification data among the plurality of items of data as candidate data, and calculating an independence between a prediction result in a case in which each item of the verification data is input to the machine learning model, and the value of the first attribute of each item of the verification data, the independence being predicated on an independence between a prediction result in a case in which each item of the candidate data is input to the machine learning model, and the value of the first attribute of each item of the candidate data, and
   selecting the first data includes selecting the first data from the candidate data.

7.    A machine learning method executable by a computer to perform a process, the process comprising:

   calculating an independence between a prediction result in a case in which each of a plurality of items of unlabeled data is input to a machine learning model, and a value of a first attribute of each of the plurality of items of data;
   selecting first data from the plurality of items of data based on the independence;
   acquiring a label of the first data; and
   executing training of the machine learning model based on the first data and the label.

8.    The machine learning method according to claim 7, wherein the independence is a mutual information amount between the prediction result and the value of the first attribute.

9. The machine learning method according to claim 7 or 8, wherein selecting the first data includes selecting based on a degree of improvement in prediction accuracy of the machine learning model due to each of the plurality of items of data based on an uncertainty of a prediction result in a case in which each of the plurality of items of data is input to the machine learning model, and based on the independence.

10. The machine learning method according to claim 9, wherein the degree of improvement increases the closer the first data is to a decision boundary of the machine learning model.

11. The machine learning method according to claim 9, wherein
selecting the first data includes selecting a predetermined number of items of the data in which an index represented by the degree of improvement, the independence, and a coefficient representing a trade-off between the degree of improvement and the independence, is equal to or more than a predetermined value, or selecting a predetermined number of items of the data having the highest indices.

12. The machine learning method according to claim 7 or 8, wherein:

calculating the independence includes configuring a part of the plurality of items of data as verification data and configuring data other than the verification data among the plurality of items of data as candidate data, and calculating an independence between a prediction result in a case in which each item of the verification data is input to the machine learning model, and the value of the first attribute of each item of the verification data, the independence being predicated on an independence between a prediction result in a case in which each item of the candidate data is input to the machine learning model, and the value of the first attribute of each item of the candidate data, and
selecting the first data includes selecting the first data from the candidate data.

13. A machine learning apparatus comprising a control unit that executes processing including:

calculating an independence between a prediction result in a case in which each of a plurality of items of unlabeled data is input to a machine learning model, and a value of a first attribute of each of the plurality of items of data;
selecting first data from the plurality of items of data based on the independence;
acquiring a label of the first data; and
executing training of the machine learning model based on the first data and the label.

14. The machine learning apparatus according to claim 13, wherein the independence is a mutual information amount between the prediction result and the value of the first attribute.

15. The machine learning apparatus according to claim 13 or 14, wherein selecting the first data includes selecting based on a degree of improvement in prediction accuracy of the machine learning model due to each of the plurality of items of data based on an uncertainty of a prediction result in a case in which each of the plurality of items of data is input to the machine learning model, and based on the independence.

16. The machine learning apparatus according to claim 15, wherein the degree of improvement increases the closer the first data is to a decision boundary of the machine learning model.

17. The machine learning apparatus according to claim 15, wherein selecting the first data includes selecting a predetermined number of items of the data in which an index represented by the degree of improvement, the independence, and a coefficient representing a trade-off between the degree of improvement and the independence, is equal to or more than a predetermined value, or selecting a predetermined number of items of the data having the highest indices.

18. The machine learning apparatus according to claim 13 or 14, wherein:

calculating the independence includes configuring a part of the plurality of items of data as verification data and configuring data other than the verification data among the plurality of items of data as candidate data, and calculating an independence between a prediction result in a case in which each item of the verification data is input to the machine learning model, and the value of the first attribute of each item of the verification data, the independence being conditioned on an independence between a prediction result in a case in which each item of the candidate data is input to the machine learning model, and the value of the first attribute of each item of the candidate data, and

selecting the first data includes selecting the first data from the candidate data.

19. A non-transitory storage medium storing a machine learning program for causing a computer to execute processing comprising:

calculating an independence between a prediction result in a case in which each of a plurality of items of unlabeled data is input to a machine learning model, and a value of a first attribute of each of the plurality of items of data;

selecting first data from the plurality of items of data based on the independence;

acquiring a label of the first data; and

executing training of the machine learning model based on the first data and the label.

# FIG.1

(4) TRAINING → MACHINE LEARNING MODEL → (5) TRANSMISSION

UNLABELED DATA SET
DATA ACQUISITION FUNCTION

LABELED DATA SET
DATA ACQUISITION FUNCTION

(1) DATA SELECTION

(3) ANSWER ← ORACLE ← (2) QUESTION ← LABELED DATA SET

EP 4 664 361 A1

# FIG.2

EP 4 664 361 A1

FIG.3

# FIG.4

# FIG.5

DECISION BOUNDARY

# FIG.6

# FIG.7

START

ACQUIRE LABELED DATA SET AND TRAIN MACHINE LEARNING MODEL — S10

IS END CONDITION OF FAIR ACTIVE LEARNING SATISFIED? — S12

YES

NO

ACQUIRE UNLABELED DATA SET AND SET PART THEREOF AS VERIFICATION DATA AND REST AS CANDIDATE DATA — S14

CALCULATE DEGREE OF UNFAIRNESS IMPROVEMENT OF EACH ITEM OF CANDIDATE DATA — S16

CALCULATE DEGREE OF ACCURACY IMPROVEMENT OF EACH ITEM OF CANDIDATE DATA — S18

CALCULATE EVALUATION VALUE OF EACH ITEM OF CANDIDATE DATA IN CONSIDERATION OF TRADE-OFF BETWEEN DEGREE OF UNFAIRNESS IMPROVEMENT AND DEGREE OF ACCURACY IMPROVEMENT — S20

SELECT TARGET DATA FROM CANDIDATE DATA ON BASIS OF EVALUATION VALUE — S22

ACQUIRE LABEL OF TARGET DATA — S24

ADD LABEL TO TARGET DATA AND ADD LABELED DATA TO LABELED DATA SET — S26

OUTPUT TRAINED MACHINE LEARNING MODEL — S28

END

# FIG.8

PREDICTION ACCURACY

FAIRNESS

EXECUTION TIME

COMPARATIVE METHOD

PRESENT METHOD

## INTERNATIONAL SEARCH REPORT

| International application No. |
|---|
| **PCT/JP2023/004458** |

| A. | CLASSIFICATION OF SUBJECT MATTER |
|---|---|

*G06N 3/091*(2023.01)i; *G06N 20/00*(2019.01)i
FI:   G06N3/091; G06N20/00 130

According to International Patent Classification (IPC) or to both national classification and IPC

| B. | FIELDS SEARCHED |
|---|---|

Minimum documentation searched (classification system followed by classification symbols)

    G06N3/00-99/00

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | ANAHIDEH, Hadis et al., Fair Active Learning, arXiv [online], 31 March 2021, [retrieved on 20 April 2023], Internet: <URL: https://arxiv.org/abs/2001.01796v5> entire text, all drawings | 1-19 |
| A | US 2021/0035014 A1 (INTERNATIONAL BUSINESS MACHINES CORPORATION) 04 February 2021 (2021-02-04) entire text, all drawings | 1-19 |
| A | WO 2022/254626 A1 (FUJITSU LIMITED) 08 December 2022 (2022-12-08) entire text, all drawings | 1-19 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 April 2023** | **09 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/004458**

| Patent document cited in search report | | | Publication date (day/month/year) | Patent family member(s) | Publication date (day/month/year) |
|---|---|---|---|---|---|
| US | 2021/0035014 | A1 | 04 February 2021 | (Family: none) | |
| WO | 2022/254626 | A1 | 08 December 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021084609 A
- WO 2022123907 A
- US 20200372406 A

**Non-patent literature cited in the description**

- **QUAN REN ; HONGBING ZHANG ; DAILU ZHANG ; XIANG ZHAO ; LIZHI YAN ; JIANWEN RUI ; FANXIN ZENG ; XINYI ZHU**. A framework of active learning and semi-supervised learning for lithology identification based on improved naive Bayes. *Expert Systems with Applications*, 15 September 2022, vol. 202, 117278